# EUROPEAN PATENT SPECIFICATION

(11) **EP 1 634 285 B1**
(45) Date of publication and mention of the grant of the patent: **29.08.2007**
(21) Application number: 04735311.5
(22) Date of filing: 28.05.2004
(51) Int. Cl.: G11B 17/22, G11B 17/04

(54) **APPLIANCE WITH A DATA CARRIER DISK DRIVE AND METHOD OF INSERTING A DATA CARRIER IN SUCH AN APPLIANCE**
VORRICHTUNG MIT EINEM DATENTRÄGERLAUFWERK UND VERFAHREN ZUM EINSETZEN EINES DATENTRÄGERS IN EINER SOLCHEN VERFAHREN
APPAREIL COMPORTANT UNE UNITE DE DISQUES UTILISABLE AVEC UN SUPPORT DE DONNEES, ET PROCEDE D'INTRODUCTION D'UN SUPPORT DE DONNEES DANS UN APPAREIL DE CE TYPE

(30) Priority: 05.06.2003 EP 03101631
(43) Date of publication of application: 15.03.2006
(73) Proprietor: Koninklijke Philips Electronics N.V., 5621 BA Eindhoven (NL)
(72) Inventor: EBERDORFER, Wolfgang, A-1101 Vienna (AT)
(74) Representative: Damen, Daniel Martijn
(86) International application number: PCT/IB2004/050803
(87) International publication number: WO 2004/109671

(56) References cited:
- DE-A- 4 317 546
- GB-A- 2 153 582
- US-A- 5 214 628
- US-A- 5 640 288
- US-A- 5 640 535

## Description

The invention relates to a device with a drive for a disc-shaped data carrier with a rotation axis, wherein the drive has data carrier load/unload means for moving the data carrier into an operating position inside the drive and for moving the data carrier out of the drive, and drive means for rotary driving of the data carrier in its operating position about its rotation axis, and wherein the device has retaining means for holding the drive so that it is capable of swiveling.

The invention also relates to a method of loading one or more disc-shaped data carriers with a rotation axis into a device which has a drive for the data carriers, wherein the drive has data carrier load/unload means for moving the data carrier into an operating position inside the drive and for moving the data carrier out of the drive, and drive means for rotary driving of the data carrier in its operating position around its rotation axis.

Such a device and such a method are known from the document GB 2 153 582 A. In this case the known device is designed for the consecutive and/or selective playback and/or recording of data on disc-shaped data carriers. Here the known device comprises on the one hand a drive for the playback and/or recording of data, said drive being mounted on a turntable, and on the other hand a storage device for a plurality of disc-shaped data carriers, wherein the storage device extends in sectors around the centrally mounted drive. The drive is able to swivel around a swivel axis which runs at right angles to the rotation axis of a data carrier positioned in the drive. Depending on the angular position of the drive, a data carrier may be moved out of the drive and loaded into one of a plurality of storage compartments of the storage device, or else taken out of the storage device and moved into the drive.

In the case of the known device, the considerable volume of the storage device has proved to be a disadvantage. Since the disc-shaped data carriers and the drive are arranged vertically in the device, the height of the storage device must be at least equal to the diameter of the data carriers. In practice even more space is required for the turntable and the casing of the drive and for other parts of the storage device mechanism. However, due to the compartment-like arrangement of the individual storage compartments, this known storage device also takes up a considerable floor space in the device, since the unused space between the storage compartments increases steadily towards the outer periphery. It is thus impossible to incorporate a drive mounted on the turntable in such a way and a storage device of the known type in devices with compact dimensions, which are becoming increasingly popular as so-called "slim-line" devices both in entertainment electronics and in data processing. Document US 5214628 discloses the features of the preamble of claim 1.

It is an object of the present invention to create a device of the type described in the first paragraph and a method of the type described in the second paragraph in which the disadvantages described above are avoided.

To solve the problem stated above, such a device according to the invention is provided with features according to the invention such that a device according to the invention may be characterized in the following manner, namely:

A device with a drive for a disc-shaped data carrier with a rotation axis, wherein the drive has data carrier load/unload means for moving the data carrier into an operating position inside the drive and for moving the data carrier out of the drive, and drive means for rotary driving of the data carrier in its operating position around its rotation axis, and wherein the device has retaining means for holding the drive so that it is capable of swiveling, wherein the retaining means are designed for swiveling the drive around a swivel axis running substantially parallel to the rotation axis of the data carrier, and wherein the retaining means are designed for swiveling the drive between a data carrier load/unload position accessible from outside the device and one or more data carrier load/unload positions inside the device and inaccessible from outside the device.

To solve the problem stated above, such a method according to the invention is provided with features according to the invention such that a method according to the invention may be characterized in the following manner, namely:

A method of loading one or more disc-shaped data carriers with a rotation axis into a device which has a drive for the data carriers, wherein the drive has data carrier load/unload means for moving the data carrier into an operating position inside the drive and for moving the data carrier out of the drive, and drive means for rotary driving of the data carrier in its operating position around its rotation axis, and wherein the following process steps are effected: moving a data carrier into the drive from the outside of the device, swiveling the drive around a swivel axis running substantially parallel to the rotation axis of the data carrier to a data carrier load/unload position inside the device, and moving the data carrier out of the drive and into data carrier storage means inside the device.

The features according to the invention result in a considerable reduction in the space required for the storage of one or more data carriers, preferably of a plurality of data carriers. The data carriers may therefore be stored without difficulty even in devices with compact casings, so-called "slim-line" devices. The devices in question may be, for example, CD players, DVD recorders or computers. The data carriers in turn may be in the form of CDs, CD-ROM, CD-RW, DVDs, etc., i.e. data carriers which can be scanned by optical means. The data carriers may alternatively be in the form of disc-shaped data carriers which can be scanned by magnetic means. The features according to the invention also make it possible to use commonly available drives, for example standard CD-ROM or CD or DVD drives which are currently manufactured in large numbers and are therefore correspondingly cheap to obtain. This also makes it possible to implement the invention on existing devices by converting these devices while retaining the drives used previously.

It may be mentioned that various attempts have been made to overcome the limitation of standard CD/DVD drives, i.e. that they can hold only one data carrier. Thus there are CD/DVD players which can handle several data carriers without the assistance of a user, by means of a special data carrier changeover mechanism. The changeover mechanism may be in the form of a large rotating carousel capable of holding three (3) to five (5) data carriers. The changeover mechanism may also be so designed that several data carriers are held in a stack from which a selected data carrier is taken by means of a gripper arm. Generally, however, these solutions have the drawback of needing a large amount of space or - as e.g. in the case of CD changers in cars - a complex mechanism which is costly to manufacture. Moreover, any such mechanism must be adapted for each type of device, so that it can be integrated with the device; the use of standard drives which would considerably simplify and facilitate implementation is ruled out for this purpose.

According to the measures of claims 2 and 9, the benefit obtained is that the turntable itself has only a very small overall height, may be adapted easily to the existing fastening means of standard drives, and moreover has great stability.

According to the measures of claims 3 and 10, the benefit obtained is that the drive in the device interior may be brought into a multiplicity of data carrier load/unload positions which are so arranged that a normally rectangular casing shape of the device is well utilized. This provides very compact storage of data carriers in the device.

According to the measures of claims 4 and 11, the benefit obtained is that the drive in the device interior may be brought into a plurality of data carrier load/unload positions, with extensive freedom in the definition of these positions. In this way, for example, a rectangular casing shape of the device may be utilized to the optimum extent.

According to the measures of claims 5 and 12, the benefit obtained is that the data carriers to be stored can be moved by the drive to the place of keeping or storage within the device, without a user coming into contact with the means of storage.

According to the measures of claims 6 and 13, the benefit obtained is that the relatively small clearance available inside the device may be used to best advantage.

According to the measures of claims 7 and 14, the benefit obtained is that an extensive range of standard drives may be used, and the loading/unloading means common in such standard drives may be used without difficulty in cooperation with data carrier storage means.

The measures of claim 15 provide the benefit that the drive, after delivering a data carrier to the data carrier storage means, continues to be available to a user as the letter is accustomed to.

The measures of claim 16 provide the benefit that the drive, in cooperation with the data carrier storage means, performs the function of a data carrier jukebox.

These and other aspects of the invention are apparent from the embodiments described below and are explained with reference to these embodiments.

The invention is described below with reference to the embodiments shown in the Figures, to which, however, the invention is not restricted.
Fig. 1 is a general plan view of a device with a drive for a disc-shaped data carrier.
Fig. 2 shows the device of Fig. 1 in a front view.
Fig. 3 shows in a schematic plan view how the drive in the device according to the invention shown in Figs. 1 and 2 may be swiveled.
Fig. 4 shows the device in a plan view with the drive swiveled into a data carrier load/unload position inside the device.
Fig. 5 shows in a side view and a plan view a drive for a disc-shaped data carrier, with the said drive fixed to a mount which may be swiveled according to the invention.
Fig. 6 shows in a side view the principle of the interaction of a drive with data carrier storage means.
Fig. 7 shows in a plan view a device with a drive which may be swiveled along a circular track.
Fig. 8 shows in a plan view a device with a drive which may be swiveled along an eccentric track.
Fig. 9 shows in a plan view a device with a drive which may be swiveled and which, in addition to the swiveling movement, may also be moved along a linear track.

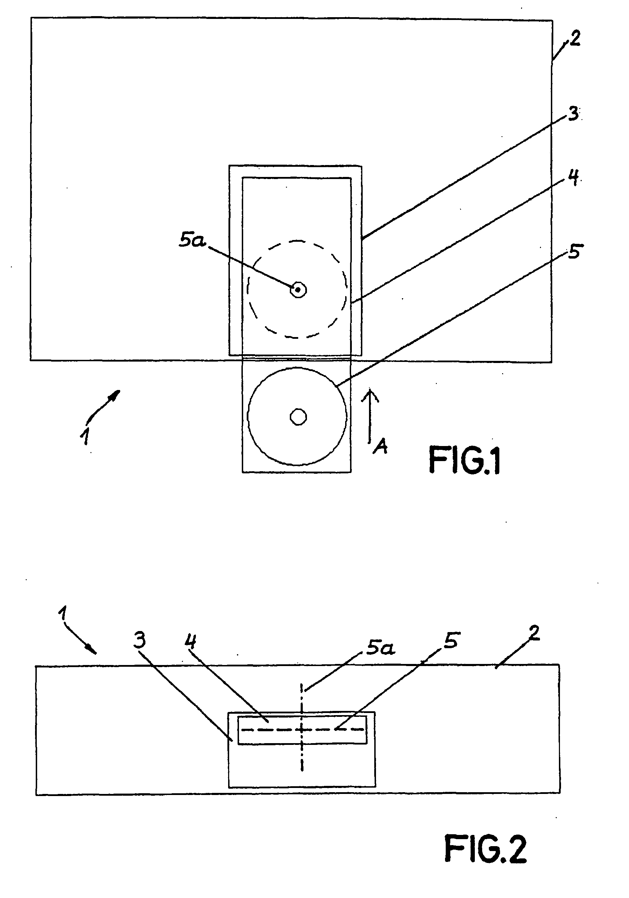

A device 1 in the form of a CD player and which may also be in the form of a DVD recorder or a computer, is shown in Fig. 1 in a plan view and in Fig. 2 in a front view. This device 1 has a casing 2 in which is accommodated a drive 3 for a disc-shaped data carrier 5. The drive 3 is so arranged that its front faces a slot or gap-like opening in the front side of the casing 2 of the device 1. The drive 3 has as loading means a load/unload device 4 which can be moved out from the front of the drive 3 in order to load or unload or to change a data carrier 5 in the form of a CD, while the load/unload device 4 can be retracted in the direction of arrow A into an operating position in the device 1 and in the area of the drive, in which operating position the data carrier 5 can be rotated around a rotation axis 5a by a drive unit - not shown - in order to record data to or to read data from the data carrier. The drive 3 is in the form of a standard drive for CDs such as those provided in CD players currently obtainable on the market. The casing 2 may be designed as a compact casing of low overall height.

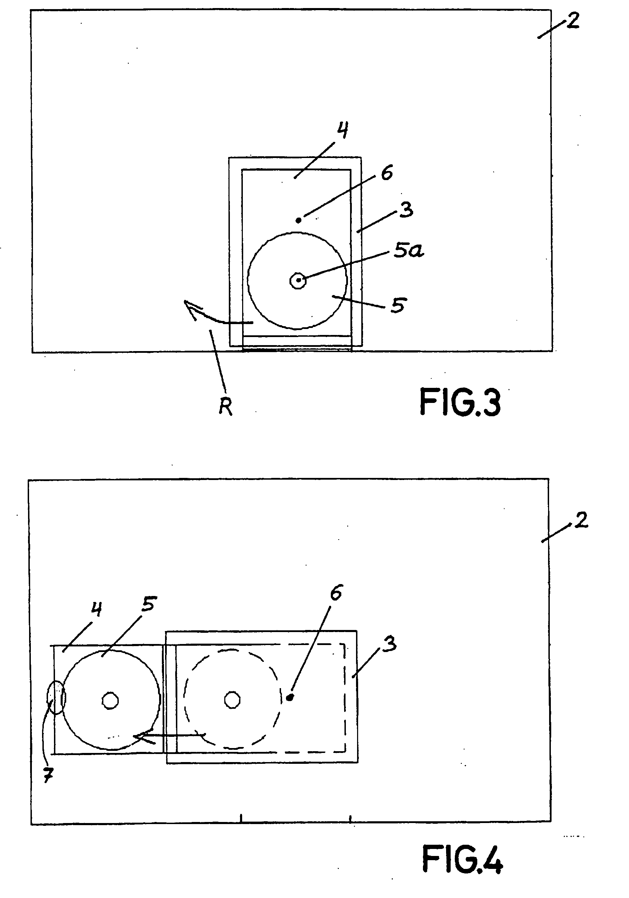

According to the invention, as shown in a schematic plan view in Fig. 3, the drive 3 is so mounted in the casing 2 that the drive 3, after the load/unload means 4 with an inserted data carrier 5 have been retracted into the operating position, can be swiveled around a swivel axis 6 in the direction of arrow R, which swivel axis 6 is aligned parallel to the rotation axis 5a of the data carrier 5.

Through the swiveling of the complete drive 3 around the swivel axis 6, the drive reaches a data carrier load/unload position inside the casing shown in Fig. 4, at which the load/unload means 4 of the drive 3 can be moved outward in order to release the data carrier 5 for handing over to the data carrier storage means 7. An embodiment of these data carrier storage means 7 is described in detail below. The load/unload means 4 work in conjunction with the data carrier storage means 7 in such a way that the data carrier 5 is transferred to the data carrier storage means 7 and stored or retained by the latter. On removal of the data carrier 5 from the load/unload means 4, the latter may be closed again and the drive 3 moved back into its data carrier load/unload position shown in Fig. 3, in which it is accessible to a user from outside the device in order to place another data carrier 5 in the drive 3. It should be pointed out that the process of swiveling to and fro of the drive 3, and also the opening and closing of the load/unload means 4 and the transfer of the data carrier 5 to the data carrier storage means 7, may be automated. It should also be mentioned that, in the embodiment shown, the swiveling angle is approximately 90°, but express reference is made to the fact that the swiveling angle is not limited to a particular angular range.

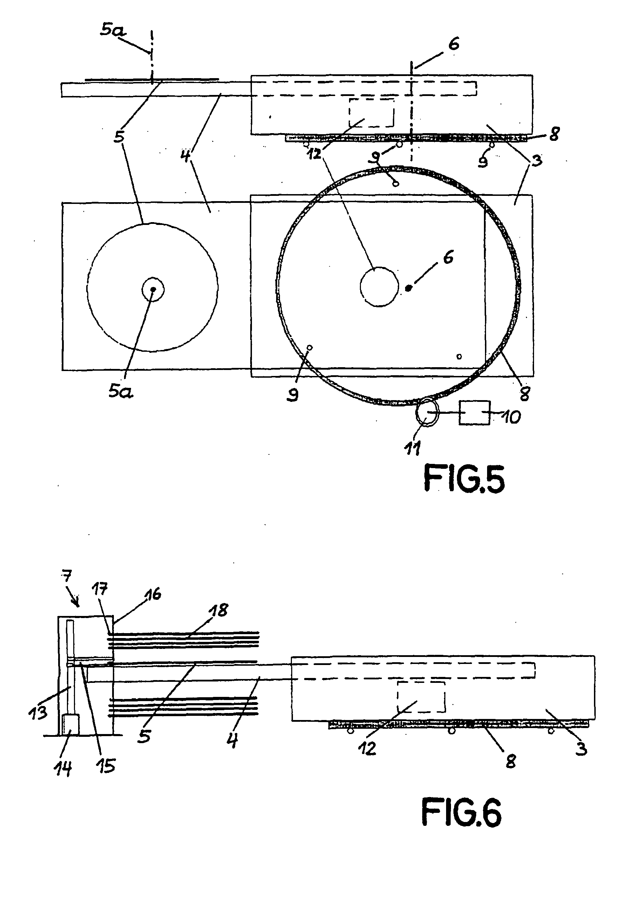

Shown in Fig. 5, in the upper part in a side view and in the lower part in a plan view, are a drive 3 and a mount 8 for the former in the form of a motorized turntable. The drive 3 is held on the turntable 8 by fastening means (for example screws or clamps) which are not shown, while the turntable 8 is able to swivel around the swivel axis 6 by means of a ball bearing represented in the drawing by the balls 9 on the underside of the turntable 8. The turntable 8 is driven by a motor 10 with a gear 11 resting on its driven shaft and engaging with teeth formed on the periphery of the turntable 8. The drive 3 also has a drive motor 12 which, with the load/unload means 4 retracted, i.e. when a data carrier 5 contained in the load/unload means is in its operating position, rotates this data carrier 5 around its rotation axis 5a.

Shown in Fig. 6 in a side view is an embodiment of the data carrier storage means 7. Here the drive 3, resting on the turntable 8, is rotated into a load/unload position inside the device, in which its open load/unload means 4 containing a data carrier 5 face towards the data carrier storage means 7. The data carrier storage means 7 comprise a spindle 13 on which a gripper mechanism 15 is mounted so as to be capable of vertical movement. The gripper mechanism 15 is equipped with two jaws which grip the data carrier 5 located in the load/unload means 4 from above and below and lift it out of the load/unload means. The data carrier 5 may then be transferred, for example by means of a sideways movement of the gripper mechanism 15, to a holder 16 equipped with a plurality of slots 17 for the storage of a stack 18 of data carriers 5, and in which the data carriers 5 are held by their peripheral edges. The upward, downward and sideways movements of the gripper mechanism 15 are effected by a motor 14. After removal of the data carrier 5 from the load/unload means 4, the latter may either be closed immediately and the drive 3 swiveled back into the position in which it is accessible to a user, or else the gripper mechanism fetches another data carrier 5 from the stack 18 and places it in the load/unload means 4, which are then closed in order to bring the data carrier 5 into its operating position above the drive motor 12 in the drive 3.

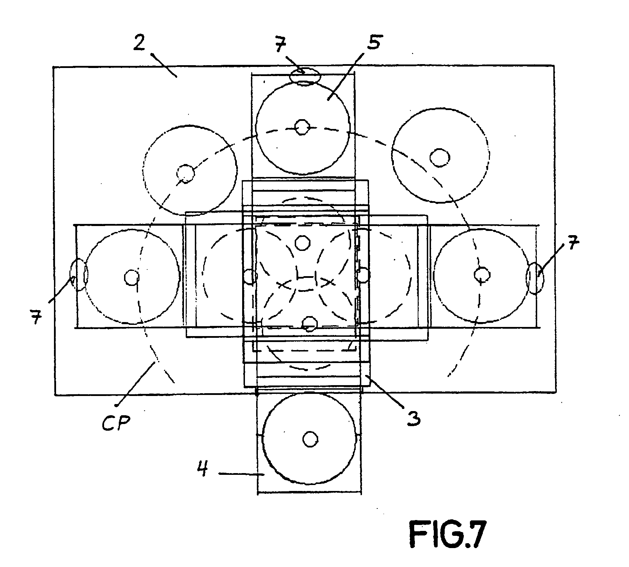

Figs. 7 to 9 show further embodiments of devices 1 with drives 3 capable of swiveling according to the invention, each in plan view.

Fig. 7 shows an embodiment of the invention in which three data carrier load/unload positions for the drive 3 are defined inside the casing 2 of the device 1, with data carrier storage means 7 provided at each of these positions. With the load/unload means 4 extended, a data carrier 5 in the load/unload means 4 will cover the circular path shown by the marked circular section CP, when the drive as a whole is swiveled through 360°. This embodiment is especially suitable for a flat casing with a relative large base area.

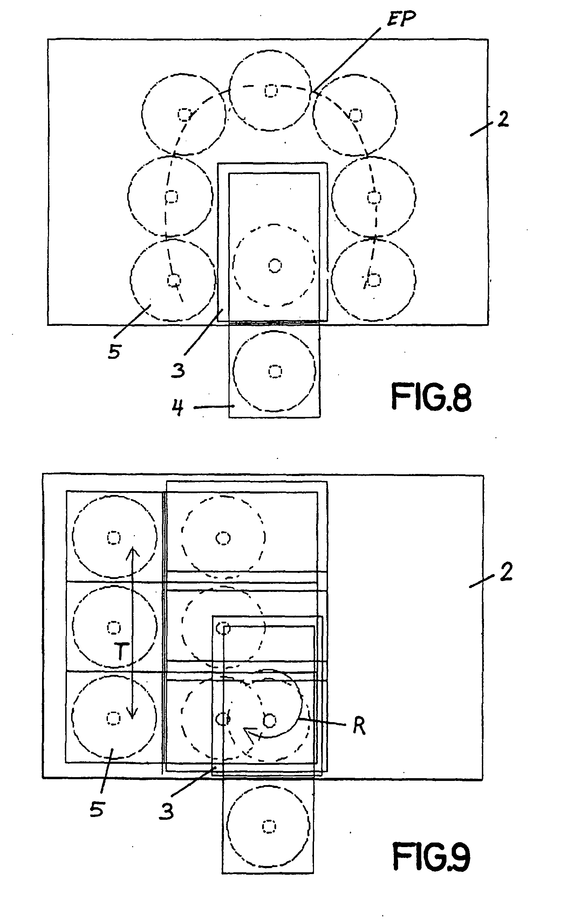

A further embodiment of the invention, which is especially suitable for use in casings which are relatively deep but not very wide, is shown in Fig. 8. In this case a data carrier 5 located in the drive 3 is given an eccentric movement component during swiveling. This may be associated with various lengths of the outward movement of the load/unload means 4 from the drive 3, i.e. at certain data carrier load/unload positions at which there is a lack of space, the load/unload means 4 are not moved out completely, but only so far that the data carrier 5 can be removed, for example upwards at an angle, from the load/unload means. In the depicted embodiment, in its journey to the various data carrier load/unload positions, a data carrier 5 would follow approximately the eccentric path EP shown by the broken line. Fig. 8 shows that, with the measures taken, a high storage or holding density of data carriers 5 can be achieved.

Finally Fig. 9 shows an embodiment of the invention which is capable of making optimal use of a rectangular base of the casing 2. For this purpose the drive 3 is not only swiveled through 90° to the left in arrow direction R, but after swiveling the drive 3 is also given a translation movement, as shown by double arrow T, to enable it to approach various data carrier load/unload positions for the data carriers 5, located consecutively one below the other in the casing 2. As is evident, the casing shape in this embodiment would also allow the drive 3 to be rotated 90° to the right and then to make a downward translation movement in the casing 2. It is thus possible to define six data carrier load/unload positions inside the casing, at each of which data carrier storage means could be positioned.

It should be mentioned that the swiveling of the drive 3 may also be effected around a swivel axis 6 running with a slight deviation from a parallel axis to the rotation axis 5a, by means of which it is possible to take account of structural features of the device 1 if, due to such structural features, it is not possible to effect swiveling in a plane parallel to the base of the device 1 - i.e. usually around a swivel axis 6 running parallel to the rotation axis 5a.

It should be mentioned that, for the purpose of the interaction of the motor 10 with the retaining means 8, a threaded rod or drive screw may also be provided. In this connection it may also be mentioned that the interaction may also be effected by using beltlike means, for example by using a V-belt or a toothed belt. In this connection it should also be mentioned that the swiveling may also by be effected by hydro-pneumatic means.

It should also be mentioned that the position of the swivel axis 6 need not coincide with the position of the rotation axis 5a or with a symmetrical axis of the drive 3, but may be provided at any desired point such as, for example, in the front right-hand area of the device 1. Due to structural factors it may also be necessary to allow the swivel axis 6 to extend outside the device 1.

## Claims

1. A device (1) with a drive (3), for a disc-shaped data carrier (5), with a rotation axis (5a), wherein the drive has data carrier load/unload means (4) for moving the data carrier into an operating position inside the drive and for moving the data carrier out of the drive, and drive means (12) for rotary driving of the data carrier in its operating position around its rotation axis (5a), wherein the device (1) has retaining means (8) for holding the drive (3) so that it is capable of swiveling, **characterised in that** the retaining means (8) are designed for swiveling the drive around a swivel axis (6) running substantially parallel to the rotation axis (5a) of the data carrier (5), and wherein the retaining means (8) are designed for swiveling the drive (3) between a data carrier load/unload position accessible from outside the device and one or more data carrier load/unload positions inside the device and inaccessible from outside the device.

2. Device (1) as claimed in claim 1, **characterized in that** the retaining means (8) are in the form of a turntable which is preferably capable of being motor-driven.

3. Device (1) as claimed in claim 1, **characterized in that** the retaining means (8) are designed for eccentric swiveling (EP) of the drive (3) around the swivel axis (6).

4. Device (1) as claimed in claim 1, **characterized in that** the retaining means (8) are also designed to translate (T) the drive (3).

5. Device (1) as claimed in claim 1, **characterized in that**, adjacent to the data carrier load/unload position inside the device which is inaccessible from outside the device, data carrier storage means (7) designed for the storage of data carriers (5) which can be moved out of the drive (3) are provided.

6. Device (1) as claimed in claim 5, **characterized in that** the data carrier storage means (7) are in the form of data carrier stacking storage means for several data carriers (5).

7. Device (1) as claimed in claim 1, **characterized in that** the data carrier load/unload means (4) are in the form of load/unload means which may be moved outwards and retracted.

8. A method of loading one or more disc-shaped data carriers (5) with a rotation axis into a device (1) which has a drive (3) for the data carriers (5), wherein the drive (3) is adapted to rotate a disc-shaped data carrier about an axis (5a) and has data carrier load/unload means (4) for moving the data carrier (5) into an operating position inside the drive and for moving the data carrier (5) out of the drive (3), and drive means (12) for rotary driving of the data carrier (5) in its operating position around its rotation axis (5a), and wherein the following process steps are effected: moving a data carrier (5) into the drive (3) from the outside of the device, swiveling the drive (3) around a swivel axis (6) running substantially parallel to the rotation axis (5a) of the data carrier (5) to a data carrier load/unload position inside the device, and moving the data carrier (5) out of the drive (3) and into data carrier storage means (7) inside the device.

9. A method as claimed in claim 8, **characterized in that** the drive is swiveled by means of a turntable (8) which is preferably motor-driven.

10. A method as claimed in claim 8, **characterized in that** the drive is swiveled around the swivel axis in an eccentric path (EP).

11. A method as claimed in claim 8, **characterized in that** the drive is also moved along a translation path (T).

12. A method as claimed in claim 8, **characterized in that**, adjacent to the data carrier load/unload position inside the device which is inaccessible from outside the device, the data carrier (5) is removed from the drive (3) and stored by data carrier storage means (7).

13. A method as claimed in claim 8, **characterized in that** several data carriers are stored in a stack by data carrier storage means (7).

14. A method as claimed in claim 8, **characterized in that** the movement of the data carrier (5) into the drive (3) and the movement of the data carrier (5) out of the drive (3) are effected by load/unload means (4) belonging to the drive.

15. A method as claimed in claim 12, **characterized in that**, after transferring the data carrier (5) to the data carrier storage means (7), the drive (3) is swiveled back around the swivel axis (6) into that position in which a fresh data carrier may be loaded into the drive from outside the device.

16. A method as claimed in claim 12, **characterized in that**, after the drive (3) has transferred the data carrier (5) to the data carrier storage means (7), the data carrier storage means (7) load into the drive a data carrier that was stored by data carrier storage means (7).

## Patentansprüche

1. Gerät (1) mit einem Laufwerk (3) für einen scheibenförmigen und eine Rotationsachse (5a) aufweisenden Datenträger (5), wobei das Laufwerk Datenträger-Lade/Abgabe-Mittel (4) zum Hineinbefördern des Datenträgers in eine Betriebsposition im Inneren des Laufwerks und zum Herausbefördern des Datenträgers aus dem Laufwerk heraus und Antriebsmittel (12) zum rotierenden Antreiben des in seiner Betriebsposition befindlichen Datenträgers um seine Rotationsachse (5a) aufweist, wobei das Gerät (1) Haltemittel (8) zum verschwenkbaren Halten des Laufwerks (3) aufweist, **dadurch gekennzeichnet, dass** die Haltemittel (8) zum Verschwenken des Laufwerks um eine Schwenkachse (6), die im Wesentlichen parallel zu der Rotationsachse (5a) des Datenträgers (5) verläuft, ausgebildet sind und wobei die Haltemittel (8) zum Verschwenken des Laufwerks (3) zwischen einer vom Geräteäußeren zugänglichen Datenträger-Lade/Abgabe-Position und zumindest einer vom Geräteäußeren unzugänglichen Datenträger-Lade/Abgabe-Position im Geräteinneren ausgebildet sind.

2. Gerät (1) nach Anspruch 1, **dadurch gekennzeichnet, dass** die Haltemittel (8) als Drehtisch ausgebildet sind, der vorzugsweise motorisch antreibbar ist.

3. Gerät (1) nach Anspruch 1, **dadurch gekennzeichnet, dass** die Haltemittel (8) zum exzentrischen Verschwenken (EP) des Laufwerks (3) um die Schwenkachse (6) ausgebildet sind.

4. Gerät (1) nach Anspruch 1, **dadurch gekennzeichnet, dass** die Haltemittel (8) zusätzlich zum Verschieben (T) des Laufwerks (3) ausgebildet sind.

5. Gerät (1) nach Anspruch 1, **dadurch gekennzeichnet, dass** benachbart zu der vom Geräteäußeren her unzugänglichen Datenträger-Lade/Abgabe-Position im Geräteinneren Datenträger-Speichermittel (7) vorgesehen sind, die zum Speichern des aus dem Laufwerk (3) heraus beförderbaren Datenträgers (5) ausgebildet sind.

6. Gerät (1) nach Anspruch 5, **dadurch gekennzeichnet, dass** die Datenträger-Speichermittel (7) als Datenträger-Stapelungsspeichermittel für mehrere Datenträger (5) ausgebildet sind.

7. Gerät (1) nach Anspruch 1, **dadurch gekennzeichnet, dass** die Datenträger-Lade/Abgabe-Mittel (4) als ausfahrbare und einziehbare Lade ausgebildet sind.

8. Verfahren zum Einbringen von mindestens einem scheibenförmigen und eine Rotationsachse aufweisenden Datenträger (5) in ein Gerät (1), das ein Laufwerk (3) für den Datenträger (5) aufweist, wobei das Laufwerk (3) dazu vorgesehen ist den scheibenförmigen Datenträger um eine Achse (5a) zu drehen und Datenträger-Lade/Abgabe-Mittel (4) zum Hineinbefördern des Datenträgers (5) in eine Betriebsposition im Inneren des Laufwerks und zum Herausbefördern des Datenträgers (5) aus dem Laufwerk (3) heraus und Antriebsmittel (12) zum rotierenden Antreiben des in seiner Betriebsposition befindlichen Datenträgers (5) um seine Rotationsachse (5a) aufweist, wobei folgende Verfahrensschritte erfolgen:
Hineinbefördern eines Datenträgers (5) in das Laufwerk (3) vom Geräteäußeren aus, Verschwenken des Laufwerks (3) um eine Schwenkachse (6), die im Wesentlichen parallel zu der Rotationsachse (5a) des Datenträgers (5) verläuft, zu einer Datenträger-Lade/Abgabe-Position im Geräteinneren, und
Herausbefördern des Datenträgers (5) aus dem Laufwerk (3) heraus und in Datenträger-Speichermittel (7) im Geräteinneren hinein.

9. Verfahren nach Anspruch 8, **dadurch gekennzeichnet, dass** das Laufwerk mittels eines Drehtisches (8) verschwenkt wird, der vorzugsweise motorisch angetrieben wird.

10. Verfahren nach Anspruch 8, **dadurch gekennzeichnet, dass** das Laufwerk in einer exzentrischen Bahn (EP) um die Schwenkachse verschwenkt wird.

11. Verfahren nach Anspruch 8, **dadurch gekennzeichnet, dass** das Laufwerk zusätzlich in einer translatorischen Bahn (T) verschoben wird.

12. Verfahren nach Anspruch 8, **dadurch gekennzeichnet, dass** benachbart zu der vom Geräteäußeren her unzugänglichen Datenträger-Lade/Abgabe-Position im Geräteinneren der Datenträger (5) aus dem Laufwerk (3) entnommen und mit Hilfe von Datenträger-Speichermitteln (7) gespeichert wird.

13. Verfahren nach Anspruch 8, **dadurch gekennzeichnet, dass** mehrere Datenträger mit Hilfe der Datenträger-Speichermittel (7) in gestapelter Form gespeichert werden.

14. Verfahren nach Anspruch 8, **dadurch gekennzeichnet, dass** das Hineinbefördern des Datenträgers (5) in das Laufwerk (3) und das Herausbefördern des Datenträgers (5) aus dem Laufwerk (3) mit Hilfe einer Lade (4) des Laufwerks erfolgt.

15. Verfahren nach Anspruch 12, **dadurch gekennzeichnet, dass** das Laufwerk (3) nach dem Abgeben des Datenträgers (5) an die Datenträger-Speichermittel (7) um die Schwenkachse (6) in jene Stellung zurückgeschwenkt wird, in der vom Geräteäußeren her neuerlich ein Datenträger in das Laufwerk ladbar ist.

16. Verfahren nach Anspruch 12, **dadurch gekennzeichnet, dass**, nachdem das Laufwerk (3) den Datenträger (5) an die Datenträger-Speichermittel (7) abgegeben hat, die Datenträger-Speichermittel (7) einen mit Hilfe der Datenträger-Speichermittel (7) gespeicherten Datenträger in das Laufwerk laden.

## Revendications

1. Dispositif (1) comprenant une unité d'entraînement (3), pour un support de données en forme de disque (5), comportant un axe de rotation (5a), où l'unité d'entraînement possède des moyens de chargement/déchargement de supports de données (4) pour déplacer le support de données dans une position de fonctionnement à l'intérieur de l'unité d'entraînement et pour déplacer le support de données hors de l'unité d'entraînement, et des moyens d'entraînement (12) pour entraîner en rotation autour de son axe de rotation (5a) le support de données dans sa positon de fonctionnement, où le dispositif (1) a des moyens de retenue (8) pour maintenir l'unité d'entraînement (3) de sorte qu'il soit capable de pivoter, **caractérisé en ce que** les moyens de retenue (8) sont conçus pour faire pivoter l'unité d'entraînement autour d'un axe de pivotement (6) tournant substantiellement parallèle à l'axe de rotation (5a) du support de données (5), et où les moyens de retenue (8) sont conçus pour faire pivoter l'unité d'entraînement (3) entre une position de chargement/déchargement des supports de données accessible depuis l'extérieur du dispositif et une ou plusieurs positions de chargement/déchargement des supports de données à l'intérieur du dispositif et inaccessible à partir de l'extérieur du dispositif.

2. Dispositif (1) selon la revendication 1, **caractérisé en ce que** les moyens de retenue (8) sont sous la forme d'un plateau tournant, qui peut de préférence être animé par un moteur.

3. Dispositif (1) selon la revendication 1, **caractérisé en ce que** les moyens de retenue (8) sont conçus pour un pivotement excentrique (EP) de l'unité d'entraînement (3) autour de l'axe de pivot (6).

4. Dispositif (1) selon la revendication 1, **caractérisé en ce que** les moyens de retenue (8) sont aussi conçus pour faire translater (T) l'unité d'entraînement (3).

5. Dispositif (1) selon la revendication 1, **caractérisé en ce qu'**il est fourni, adjacents à la position de chargement/déchargement des supports de données à l'intérieur du dispositif, qui est inaccessible depuis l'extérieur du dispositif, des moyens de stockage (7) des supports de données, conçus pour le stockage de supports de données (5), qui peuvent être sortis de l'unité d'entraînement (3).

6. Dispositif (1) selon la revendication 5, **caractérisé en ce que** les moyens de stockage (7) des supports de données sont sous la forme de moyens de stockage par empilement pour plusieurs supports de données (5).

7. Dispositif (1) selon la revendication 1, **caractérisé en ce que** les moyens de chargement/déchargement (4) sont sous la forme de moyens de chargement/déchargement qui peuvent être déplacés vers l'extérieur et rétractés.

8. Procédé de chargement de un ou plusieurs supports de données en forme de disque (5) comportant un axe de rotation, dans un dispositif (1), qui possède une unité d'entraînement (3) pour les supports de données (5), où l'unité d'entraînement (3) est adaptée pour faire tourner un support de données en forme de disque autour d'un axe (5a), et possède des moyens de chargement/déchargement de supports de données (4) pour déplacer le support de données (5) dans une position de fonctionnement à l'intérieur de l'unité d'entraînement et pour déplacer le support de données (5) hors de l'unité d'entraînement (3), et des moyens d'entraînement (12) pour entraîner en rotation autour de son axe de rotation (5a) le support de données (5) dans sa positon de fonctionnement, et où les étapes de processus suivantes sont effectuées: déplacer un support de données (5) dans une unité d'entraînement (3) depuis l'extérieur du dispositif, faire pivoter l'unité d'entraînement (3), autour d'un axe de pivotement (6) tournant substantiellement parallèlement à l'axe de rotation (5a) du support de données (5), vers une position de chargement/déchargement des supports de données à l'intérieur du dispositif, et faire sortir le support de données (5) hors de l'unité d'entraînement (3) et dans le moyen de stockage (7) des supports de données à l'intérieur du dispositif.

9. Procédé selon la revendication 8, **caractérisé en ce que** l'unité d'entraînement est pivotée au moyen d'un plateau tournant (8), qui est de préférence animé par un moteur.

10. Procédé selon la revendication 8, **caractérisé en ce que** l'unité d'entraînement est pivotée autour de l'axe de pivotement sur un trajet excentrique (EP).

11. Procédé selon la revendication 8, **caractérisé en ce que** l'unité d'entraînement est aussi déplacée le long d'un trajet de translation (T).

12. Procédé selon la revendication 8, **caractérisé en ce que**, adjacent à la position de chargement/déchargement des supports de données à l'intérieur du dispositif qui est inaccessible depuis l'extérieur du dispositif, le support de données (5) est retiré de l'unité d'entraînement (3) et stocké par le moyen de stockage (7) des supports de données.

13. Procédé selon la revendication 8, **caractérisé en ce que** plusieurs supports de données sont stockés dans une pile par le moyen de stockage (7) des supports de données.

14. Procédé selon la revendication 8, **caractérisé en ce que** le mouvement du support de données (5) dans l'unité d'entraînement (3) et le mouvement du support de données (5) hors de l'unité d'entraînement (3) sont effectués par les moyens de chargement/déchargement (4) appartenant à l'unité d'entraînement.

15. Procédé selon la revendication 12, **caractérisé en ce que**, après le transfert du support de données (5) au moyen de stockage (7) des supports de données, l'unité d'entraînement (3) est pivotée en retour autour de l'axe de pivot (6) dans cette position, dans laquelle un nouveau support de données peut être chargé dans l'unité d'entraînement à partir de l'extérieur du dispositif.

16. Procédé selon la revendication 12, **caractérisé en ce que**, après que l'unité d'entraînement (3) a transféré le support de données (5) vers le moyen de stockage (7) des supports de données, le moyen de stockage (7) des supports de données charge dans l'unité d'entraînement un support de données, qui avait été stocké par le moyen de stockage (7) des supports de données.
